# EUROPEAN PATENT APPLICATION

(11) **EP 0 549 833 A1**
(43) Date of publication of application: **07.07.1993**
(21) Application number: 91312075.4
(22) Date of filing: 30.12.1991
(51) Int. Cl.: B65G 15/14

(54) **Double belt conveyor systems**

(71) Applicant: Bridgestone Corporation, Tokyo 104 (JP)
(72) Inventor: Kuroda, Kimihide, Kamakura City, Kanagawa Pref. (JP)
(74) Representative: Whalley, Kevin

(57) **Abstract**

A sandwich conveyor system comprises two pairs of head pulley and tail pulley (1,2;3,4), and two conveyor belts (5,6) each endlessly extending between the head pulley (2,4) and tail pulley (1,3) of each pair in form of crank so as to sandwich a material (8) to be conveyed between opposed surfaces of the conveyor belts (5,6). In such a system, a guide roller (10) including a reduced central portion (11)(21), a tapered portion and an enlarged end portion (12,13)(22,23) is disposed at a bent position of the crank.

## Description

This invention relates to a sandwich conveyor system for transporting a material to be conveyed such as powder, granulates, lumps and the like at a state of sandwiching between opposed surfaces of two belt conveyors through elastic deformation of the conveyors, and more particularly to an improvement in a bent portion of the conveyor belt after the material to be conveyed is fed to the surface of the belt.

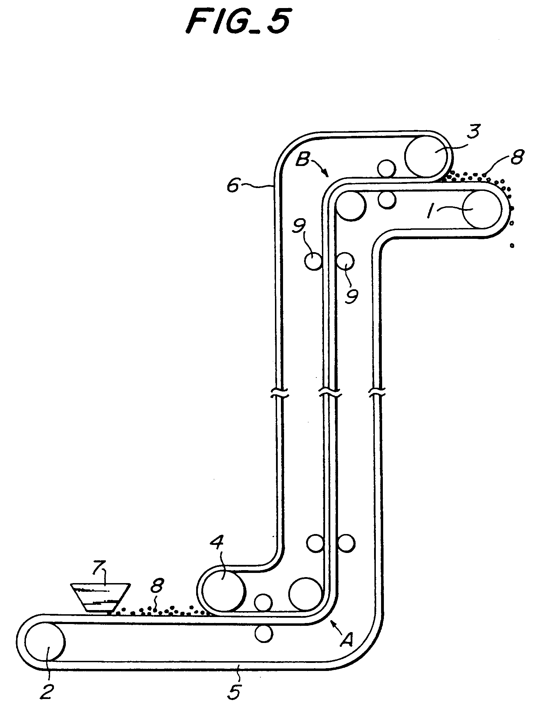

In general, this type of the sandwich conveyor system is shown in Fig. 5, in which numerals 1 and 2 are a pair of head pulley and tail pulley and numerals 3 and 4 another pair of head pulley and tail pulley.

Numeral 5 is a conveyor belt endlessly extending between the head pulley 1 and the tail pulley 2 at a side of supporting a material to be conveyed.

On the other hand, numeral 6 is a conveyor belt endlessly extending between the head pulley 3 and the tail pulley 4 at a side of pushing the material to be conveyed toward the conveyor belt 5.

Since the opposed surfaces of the conveyor belts 5 and 6 are closed to each other, a material 8 to be conveyed is fed from a hopper 7 onto a surface of a horizontally running portion in the supporting-side conveyor belt 5 and then covered with the surface of the pushing-side conveyor belt 6, whereby the conveying material 8 is transported at a state of sandwiching between these belts 5, 6 while synchronizing moving speeds of the belts 5, 6 with each other.

Numeral 9 is a pressure roll for pressing side edge portions of the conveyor belts 5, 6 to each other to prevent the spilling of the conveying material 8 from a space between the side edge portions of the belts.

In the illustrated embodiment, the conveying material 8 is transported from a discharge port of the hopper 7 toward a position more higher than the discharge port by rendering the synchronously running conveyor belts into a crank form having bent portions A and B.

In such a sandwich conveyor system, when the two conveyor belts transporting the conveying material at a sandwiched state therebetween are bent in form of crank, it is necessary to bend these belts without falling down the conveying material from a space between the belts and causing forcible deformation and the like in the belts. Further, it is required to make a bending radius of the belt as large as possible for preventing the fatigue failure of the belt due to the bending. For this end, the two conveyor belts are usually supported by many antilifting rollers.

Moreover, in order to particularly prevent the bending fatigue of the support-side conveyor belt 5 without forcedly bending, it is said that a horizontal portion of the belt 5 extending between the head pulley 1 and the tail pulley 2 is preferably made long as far as possible.

In the conventional sandwich conveyor system, therefore, the bending radius is large and the horizontal distance is long, so that there is a fundamental drawback that such a system can not be used in conveying places having a narrow width or a restricted height.

It is, therefore, an object of the invention to solve the aforementioned problems of the conventional technique and to provide a sandwich conveyor system capable of satisfactorily using even in a narrow conveying place.

According to the invention, there is the provision of a sandwich conveyor system comprising two pairs of head pulley and tail pulley, and two conveyor belts each endlessly extending between the head pulley and tail pulley of each pair in form of crank so as to sandwich a material to be conveyed between opposed surfaces of said conveyor belts, characterized in that a guide roller including a reduced central portion, a tapered portion and an enlarged end portion is disposed at a bent position of said crank so as to press said conveying material together with one of said conveyor belts toward the other conveyor belt.

In a preferred embodiment of the invention, the guide roller is disposed inside a conveyor belt having a smaller radius curvature among the conveyor belts at the bent position of the crank. In another preferred embodiment of the invention, the reduced central portion of the guide roller is separated from the enlarged end portions thereof.

The invention will be described with reference to the accompanying drawings, wherein:
Fig. 1 is a schematic view of a general arrangement of the sandwich conveyor system according to the invention;
Fig. 2 is a perspective view of a guide roller used in the invention;
Fig. 3 is a schematic view partly shown in section in the vicinity of a bent portion when a conveying material is transported by the sandwich conveyor system according to the invention;
Fig. 4 is a front view of another guide roller used in the invention; and
Fig. 5 is a schematic view of the conventional sandwich conveyor system.

According to the invention, it is an essential feature to dispose a guide roller including a reduced central portion, a tapered portion and an enlarged end portion at a bent position of a crank-formed conveyor belt most subjected to fatigue. By using such a guide roller, the conveying material being apt to move upward and downward or leftward and rightward during the transportation is gathered up toward the reduced central portion of the guide roller, so that the bearing of the conveyor belt against the conveying material is mitigated during the bending of the conveyor belt at the bent position.

In other words, even when the conveying material is sandwiched between the supporting-side conveyor belt and the pushing-side conveyor belt during the transportation, these belts are opened or closed substantially equally and naturally by the use of the above guide roller in the vicinity of the bent portion, so that the fatigue of the conveyor belts based on uneven opening and closing thereof is eliminated and hence the conveying material can be transported smoothly.

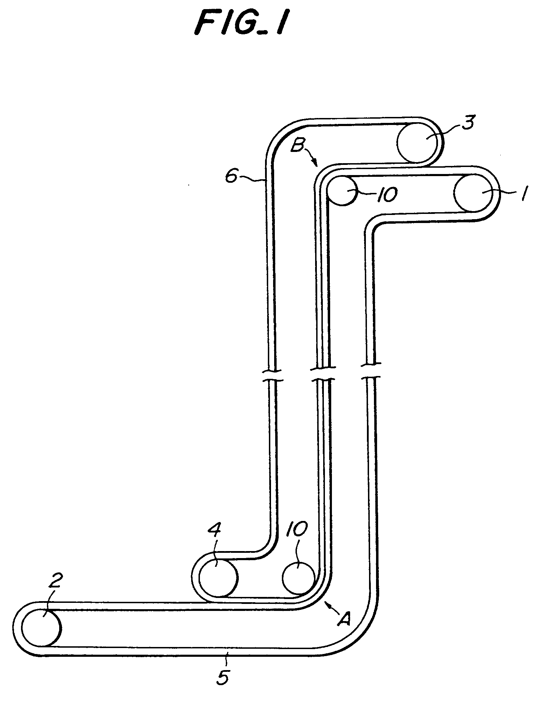

In Fig. 1 is shown an embodiment of the sandwich conveyor system according to the invention, in which numerals 1 to 6 are the same as previously mentioned in Fig. 5. That is, the supporting-side conveyor belt 5 is run together with the pushing-side conveyor belt 6 so as to sandwich a material to be conveyed between the opposed surfaces of the conveyor belts 5 and 6. Moreover, the hopper, conveying material and pressure rollers and the like are omitted in Fig. 1.

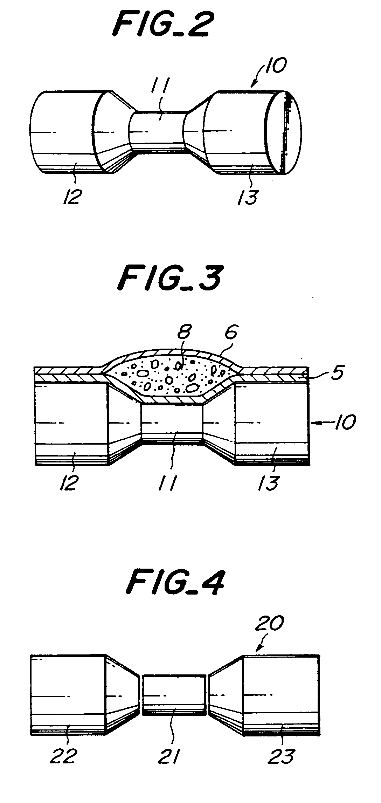

As shown in Fig. 2, a guide roller 10 including a reduced central portion 11, a tapered portion and an enlarged end portion 12, 13 is disposed at bent portions A, B of the crank-shaped conveyor belts 5, 6 so as to contact with the bent surfaces of the conveyor belts 5, 6.

In the bent portion A, therefore, the guide roller 10 is contacted with the rear surface of the pushing-side conveyor belt 6 having a smaller radius of curvature to gather the conveying material toward the reduced central portion of the guide roller 10. Thus, the conveying material is gathered up between the opposed surfaces of the conveyor belts 5 and 6 in a substantially central portion thereof, so that the bend-closing of these belts 5, 6 as a whole is naturally carried out at a state of sandwiching the conveying material between the belts.

In the other bent portion B, the guide roller 10 is contacted with the rear surface of the supporting-side conveyor belt 5 having a smaller radius of curvature to gather the conveying material toward the reduced central portion of the guide roller 10. Thus, the conveying material is gathered up between the opposed surfaces of the conveyor belts 5 and 6 in a substantially central portion thereof likewise the above case, so that the bend-opening of these belts 5, 6 is smoothly carried out and hence the fatigue of the belt based on the uneven opening is not stored in the conveyor belts.

In Fig. 3 is shown a state of transporting the conveying material 8 around the guide roller 10 in the vicinity of the bent portion B, in which the supporting-side conveyor belt 5 is contacted with the guide roller 10 and curved along the tapered portions of the guide roller 10 toward the reduced central portion 11 thereof and the conveying material 8 is concentrically sandwiched between the curved portion of the conveyor belt 5 and the conveyor belt 6.

Moreover, the above effect can be more developed by arranging plural guide rollers 10 side by side in each of the bent portions A, B.

In addition, the guide rollers may be arranged so as to sandwich the conveyor belts 5, 6 from both sides at each of the bent portions A, B.

In Fig. 4 is shown another guide roller 20 to be used in the invention, in which a reduced central portion 21 is separated from enlarged end portions 22, 23.

In the guide roller 10 of Fig. 2, the reduced central portion 11 is integrally united with the enlarged end portions 12, 13 through the tapered portions, so that peripheral speed becomes different between the reduced central portion 11 and the enlarged end portion 12, 13. The use of such a guide roller hardly comes into problem if the running speed of the belt is relatively slow and the conveying material is light in the weight and small in the size. However, when the conveying material is transported under severe conditions, it is feared that the central portion of each conveyor belt 5, 6 is largely abraded due to the difference of peripheral speed between the reduced central portion 11 and the enlarged end portion 12, 13 of the guide roller 10.

In the guide roller 20 of Fig. 4, therefore, the reduced central portion 21 is separated from the enlarged end portions 22, 23 for effectively absorbing the above difference of peripheral speed. That is, the guide roller is divided into several segments to separately rotate these segments, whereby the abrasion of the central portion of the conveyor belt 5, 6 due to the difference of peripheral speed is prevented to more improve the durability of the conveyor belt itself.

As mentioned above, according to the invention, the guide roller including the reduced central portion and the enlarged end portions is disposed in the bent portion of the crank-shaped conveyor belt in the sandwich conveyor system, whereby the horizontal distance of the upper and lower conveyor belts required for turning at the bent portion can be considerably shortened and also the vertical distance or slanting distance of the crank-shaped conveyor belt can be more increased. Therefore, the sandwich conveyor system according to the invention can be applied to narrow places and the like, so that the invention is high in the industrial merit.

## Claims

1. A sandwich conveyor system comprising two pairs of head pulley and tail pulley, and two conveyor belts each endlessly extending between the head pulley and tail pulley of each pair in form of crank so as to sandwich a material to be conveyed between opposed surfaces of said conveyor belts, characterized in that a guide roller including a reduced central portion, a tapered portion and an enlarged end portion is disposed at a bent position of said crank so as to press said conveying material together with one of said conveyor belts toward the other conveyor belt.

2. The sandwich conveyor system according to claim 1, wherein said guide roller is disposed inside a conveyor belt having a smaller radius curvature among said conveyor belts at the bent position of the crank.

3. The sandwich conveyor system according to claim 1, wherein said reduced central portion of said guide roller is separated from said enlarged end portions thereof.
